# EUROPEAN PATENT APPLICATION

(11) **EP 3 992 253 A1**
(43) Date of publication of application: **04.05.2022**
(21) Application number: 20205287.4
(22) Date of filing: 02.11.2020
(51) Int. Cl.: C08L 91/08, C08L 95/00

(54) **A METHOD TO PRODUCE A FOAMED BITUMEN AND A WAX DISPERSION THEREFOR**

(71) Applicant: Sasol Wax GmbH, 20457 Hamburg (DE)
(72) Inventor: Butz, Thorsten, 21244 Buchholz (DE); Gross-Matthäi, Susann, 22529 Hamburg (DE); Oelkers, Carsten, 21220 Seevetal (DE); Jones, Ben, 20249 Hamburg (DE)
(74) Representative: Müller Schupfner & Partner Patent- und Rechtsanwaltspartnerschaft mbB

(57) **Abstract**

The invention relates to a method to produce a foamed bitumen composition by adding a wax dispersion to a bitumen feedstock in a bitumen foaming device to produce the foamed bitumen, and to a method to produce an asphalt mix by adding a bitumen feedstock and a wax dispersion to an aggregate in an asphalt mixer to produce the asphalt mix. The invention extends to a wax dispersion, the wax dispersion comprising a wax comprising one or more hydrocarbon waxes selected from the group comprising Fischer-Tropsch waxes, petroleum-based waxes, paraffin waxes, polyolefin waxes and mixtures thereof; water; and an emulsifier.

## Description

### Field of the Invention

This invention relates to a method to produce a foamed bitumen, a bitumen composition, a method to produce an asphalt mix, a wax dispersion, and the use of a wax dispersion in said methods.

### Background of the Invention

Bitumen is a naturally occurring mixture of organic compounds with viscoelastic properties. Bitumen is typically obtained from the vacuum distillation of crude oil. It is a sticky, non-volatile substance which is largely soluble in non-polar solvents.

Bitumen is widely used in construction applications, for example in roof coatings, bitumen blanks, etc., but one of the most important applications for bitumen is its use as a binder for stone aggregates in asphalt for road paving.

To improve the performance of bitumen-based asphalt products, different additives or modifiers are often used, such as fillers (e.g. hydrated lime, cement, carbon black), extenders (e.g. sulphur, lignin), rubber, elastomeric polymers, plastomeric polymers, resins, fibres (e.g. rock wool, cellulose), anti-oxidants, hydrocarbons, rejuvenators, antistripping agents, organosilanes, surfactants and waste materials (e.g. reclaimed asphalt pavement (RAP)).

Waxes are known as suitable additives for bitumen, since they generally help to improve the quality of asphalt mixes and road paving. Hydrocarbon waxes such as paraffin waxes and Fischer-Tropsch waxes have been used to modify the viscosity of bitumen at different temperatures.

Waxes are generally defined as chemical compositions, which have a drop melting point above 40°C, are polishable under slight pressure, are kneadable or hard to brittle and transparent to opaque at 20°C, melt above 40°C without decomposition, and typically melt between 50°C and 90°C and in exceptional cases up to 200°C, form pastes or gels and are poor conductors of heat and electricity.

Waxes can be classified according to various criteria, for example according to their origin. According to origin, waxes can be divided into two main groups: natural waxes and synthetic waxes. Natural waxes can further be classified into fossil waxes (e.g. petroleum waxes) and non-fossil waxes (e.g. animal and vegetable waxes). Petroleum waxes can be classified into macrocrystalline waxes (paraffin waxes) and microcrystalline waxes (microwaxes). Synthetic waxes can be classified into partially synthetic waxes (e.g. amide waxes) and fully synthetic waxes (e.g. polyolefin waxes or Fischer-Tropsch waxes).

Paraffin waxes can for example originate from the vacuum distillation of crude oil. Paraffin waxes are clear, odour-free and can be refined for food contact. They primarily contain a range of n-alkanes, but also contain iso-alkanes and some cycloalkanes. Raw or crude petroleum based waxes (petroleum slack waxes) have a large content of short-chain and highly branched alkanes ("oils"), which can be removed when said waxes are de-oiled. Different distributions and qualities of paraffin waxes can be obtained via de-oiling. A petroleum slack wax is a paraffin wax with an oil content in the range from 5% to 30%. Petroleum Slack waxes may be further refined, e.g. by distillation, bleaching and hydrotreating to become a refined petroleum based wax.

Microwaxes can for example originate from de-asphalting, de-aromatization, and de-oiling of petroleum vacuum distillation residues. They are rich in branched and cyclic alkanes and contain generally less than 50% n-alkanes.

Synthetic Fischer-Tropsch waxes originate from the catalysed Fischer-Tropsch synthesis of syngas (CO and H₂) to alkanes. This synthesis route leads to a mixture of hydrocarbons comprising linear hydrocarbons and linear hydrocarbons with methyl-branching, and preferably no cyclic hydrocarbons. There are differences between petroleum-based paraffin waxes and Fischer-Tropsch waxes which result in them having different properties, e.g. with respect to crystallization properties and rheological behaviour. Another source of synthetic waxes are polyolefin waxes, which are hydrocarbons obtained from the oligomerization or polymerization of olefinic monomers, possibly followed by hydrotreating.

Asphalt mixes and road paving are strictly controlled according to national and international regulations and standards in order to ensure their quality and integrity. Apart from aiming to enhance the performance of asphalt mixes, one key driver of many regulations and standards is the reduction of the bitumen temperature during road paving operations. The main reason for this is to reduce energy input into road paving operations thus reducing the associated CO₂ footprint, as well as to reduce bitumen fumes and other gaseous emissions to protect the health of construction crews. As a result, there is a growing global trend towards warm mix asphalt (WMA) processes which operate at lower temperature.

Foamed bitumen is conventionally produced by adding small amounts of water (e.g. approximately 2-5wt%) to hot bitumen. When injected into the hot bitumen the water evaporates abruptly, causing foaming of the bitumen in a saturated steam atmosphere. The bitumen can expand by 20 to 30 times its original volume.

The intensity and effectiveness of the bitumen foaming process can be improved by controlling basic physical conditions in the foaming apparatus, such as the pressure and temperature. In road construction machines or in laboratory plants, bitumen foaming takes place in an expansion chamber where water is injected into the hot bitumen, which has a temperature of approximately 180°C and a pressure of around 5 bar gauge (g). The foamed bitumen thus produced escapes the expansion chamber through a nozzle and can immediately by mixed with aggregates, which is then treated/coated with bitumen to form an asphalt for road paving.

Foaming of bitumen changes its key physical parameters and allows for a larger surface area of the bitumen, leading to an improved bitumen coating of aggregates. Foamed bitumen is less viscous and disperses more readily in aggregates. A foamed bitumen can also be handled at temperatures well below 100°C.

WO2000068302A1 relates to a method of producing a bituminous foam, the method comprising raising the temperature of an emulsion which includes bitumen and a liquid which is substantially insoluble in said bitumen. To produce the foamed bitumen, the emulsion is discharged from a high-pressure environment to a low-pressure environment, whereby said emulsion foams after discharge into the low-pressure environment.

CN104861674A relates to a water-in-oil type asphalt foaming agent comprising an oil phase containing residual oil, asphalt or fraction oil, and a water phase containing surfactant dispersed in continuous phase of oil.

DE3834950C1 relates to the production of a bituminous blend by adding finely divided polymer bitumen binder in a gaseous or liquid carrier to hot bitumen and introducing the blend into a mixing machine containing granular additive. An emulsion, suspension or dispersion of the polymer is preferably formed with the liquid carrier and this mixture is then added to a hot bitumen stream before the blend is introduced into the mixing machine.

PL398906A relates to a process for the manufacture of asphalt concrete using reduced temperature technology wherein foamed asphalt is added to the mineral mix, characterized in that synthetic F-T wax is added to liquid asphalt, preferably in an amount of from 2.0 to 3.5%, and foamed after mixing; subsequently, it is combined with the mineral mix heated to no more than 100°C.

Current warm mix asphalt processes that apply bitumen foaming technology and/or use chemical additives based on surfactants are generally known but have practical drawbacks. For example: water-based bitumen foaming typically reduces asphalt quality and requires investment in specialised foaming units, whereas chemical additives often carry additional troublesome health and environmental risks.

A method to produce foamed bitumen that at least ameliorates these problems, but at the same time maintains an asphalt quality suitable for paving, e.g. road paving, would be advantageous.

### Description of the Invention

### Wax Dispersion

According to the invention, there is provided a wax dispersion, the wax dispersion comprising:
a wax comprising one or more hydrocarbon waxes, preferably at least two hydrocarbon waxes, selected from the group comprising Fischer-Tropsch waxes, petroleum-based waxes, polyolefin waxes, or mixtures thereof;
water; and
an emulsifier.

Preferably, the wax dispersion is a dispersion of the wax in water, in which water is the continuous phase and the wax is the dispersed phase.

The petroleum-based wax may be a petroleum slack wax, a refined petroleum wax, an unrefined petroleum wax, or mixtures thereof. Preferably, the petroleum-based wax is a petroleum slack wax.

Optionally, the wax dispersion may additionally comprise alpha olefins, fatty acids, fatty alcohols, esters of fatty acids, amide waxes, or any mixture thereof.

The wax dispersion may comprise an elastomer.

The wax dispersion may comprise from about 5 wt% to about 95 wt% of the wax, preferably from about 30 wt% to about 70 wt% of the wax, based on the total mass of the wax dispersion.

The wax dispersion may comprise from about 0.2 wt% to about 10 wt% of the emulsifier, preferably from about 1 wt% to about 6 wt% of the emulsifier, based on the total mass of the wax dispersion.

Where the wax dispersion comprises the elastomer, the wax dispersion may comprise from about 1 wt% to about 70 wt% of the elastomer, preferably from about 20 wt% to about 50 wt% of the elastomer, based on the total mass of the wax dispersion.

Preferably, the wax is a mixture of a Fischer-Tropsch wax and a petroleum slack wax.

Where the wax is a mixture of a Fischer-Tropsch wax and a petroleum slack wax, the wax comprises or consists of:
20 wt% to 80 wt% of the petroleum slack wax; and
20 wt% to 80 wt% of the Fischer-Tropsch wax,
each relative to a total mass of the mixture of the Fischer-Tropsch wax and the petroleum slack wax.

The Fischer-Tropsch wax may have the following properties:
a congealing point according to ASTM D938 of 50°C or higher, preferably 60°C or higher, more preferably between 70°C and 110°C, most preferably between 75°C and 82°C;
a MEK-oil content according to ASTM D7211-06 below 5 wt%, preferably below 2 wt%;
a kinematic viscosity at 100°C according to ASTM D7042-11 from 3 mm²/s to 15 mm²s, preferably 5 mm²/s to 10 mm²/s, more preferably from 7mm²/s to 9 mm²/s;
a needle penetration at 25°C according to ASTM D1321 below 30 1/10mm, preferably below 10 1/10mm; and
a n-alkane content above 80 wt%.

The petroleum slack wax may have the following properties:
a congealing point according to ASTM D938 below 65°C;
a MEK-oil content according to ASTM D7211-06 above 5wt%, preferably above 15 wt%;
a kinematic viscosity at 100°C according to ASTM D7042-11 from 3.5 mm²/s to 10 mm²/s, preferably from 5 mm²/s to 10 mm²/s, more preferably from 6 mm²/s to 8 mm²/s;
a needle penetration at 25°C according to ASTM D1321 above 50 1/10 mm; and
a n-alkane content below 70 wt%, preferably below 40 wt%.

The emulsifier may be an anionic emulsifier, a cationic emulsifier, a non-ionic emulsifier, or any mixture thereof. Preferred is a cationic emulsifier. Preferably, the emulsifier is an amine-based cationic emulsifier.

Where the wax dispersion comprises an elastomer, the elastomer may be a styrene-butadiene rubber (SBR) polymer, a butadiene-acrylonitrile polymer, an isoprene polymer, a chloroprene polymer, a styrene-isoprene polymer, a styrene-ethylene/butylene polymer, a styrene-butadiene-styrene (SBS) polymer, a latex dispersion, or any mixture thereof.

The styrene-butadiene rubber (SBR) polymer may be provided in the form of a styrene-butadiene rubber (SBR) polymer dispersion in water (water is the continuous phase). The styrene-butadiene styrene (SBS) polymer may be provided in the form of a styrene-butadiene styrene (SBS) polymer dispersion in water (water is the continuous phase).

### Method to Produce a Foamed Bitumen Composition

According to another aspect of the invention, there is provided a method to produce a foamed bitumen composition, the method comprising:
adding the wax dispersion as hereinbefore defined to a bitumen feedstock in a bitumen foaming device thereby to produce the foamed bitumen.

When it is referred to "hereinbefore" or "hereinbefore defined" herein, this means including the preferred embodiments mentioned before.
The method may be carried out in batch mode or in continuous mode.

The foamed bitumen may be discharged from the bitumen foaming device via a lance or a nozzle. The foamed bitumen may be used to coat or treat an aggregate or an aggregate mix, thereby to produce an asphalt or an asphalt mix for paving, e.g. road paving.

The bitumen in the bitumen foaming device may be at a temperature in the range of from about 100°C to about 200°C, preferably at a temperature in the range of from about 120°C to about 180°C.

The bitumen foaming device may be operated at a pressure in the range of from about 2 bar gauge (g) to about 10 bar(g), preferably at a pressure in the range of from about 4 bar(g) to about 8 bar(g).

The wax dispersion may be added to the bitumen feedstock in an amount of from about 0.1 wt% to about 10 wt%, preferably from about 2 wt% to about 6 wt%, based on the total mass of the bitumen feedstock.

The foamed bitumen may have a volume of from about 1.5 times to about 50 times, preferably from about 2 times to about 30 times, relative to a starting volume of the bitumen feedstock. In other words, the volume expansion of foamed bitumen relative to bitumen feedstock may be from about 1.5 time to about 50 times, preferably from about 2 times to about 30 times.

The foamed bitumen may have a foam half-life of from about 4s to about 60s, preferably from about 15s to about 40s. Advantageously, the foamed bitumen produced according to the method of the invention has a foam half-life that is similar to a typical asphalt mix batch cycle time.

### Method to Produce an Asphalt Mix

According to another aspect of the invention, there is provided a method to produce an asphalt mix, the method comprising:
adding a bitumen feedstock and the wax dispersion as hereinbefore defined to an aggregate in an asphalt mixer thereby to produce the asphalt mix.

The aggregate may comprise or may consist of recycled or reclaimed asphalt pavement (RAP).

The method may be carried out in batch mode or in continuous mode.

The asphalt mixer may be a pug mill.

The bitumen feedstock may be added to the aggregate prior to adding the wax dispersion to the aggregate.

The bitumen feedstock may be added to the aggregate after adding the wax dispersion to the aggregate.

The bitumen feedstock may be added to the aggregate concurrently with adding the wax dispersion to the aggregate.

The bitumen feedstock may be foamed in the asphalt mixer when the bitumen feedstock is contacted with the wax dispersion.

In an alternative embodiment, the wax dispersion may be added to the bitumen feedstock in a bitumen foaming device thereby to produce a foamed bitumen composition, and the foamed bitumen composition may then be added to the aggregate in the asphalt mixer.

The foamed bitumen may be produced according to the method hereinbefore described.

The asphalt mix may be a warm mix asphalt.

The asphalt mix may be discharged from the asphalt mixer to a truck or to a silo. The asphalt mix may be used for paving, e.g. road- or other paving.

Typically, the asphalt mix is loaded in a truck and transported to a building site where the asphalt mix is applied to a surface with a paver to obtain an asphalt surface, which is then compacted with a roller.

The asphalt mixer may be operated at a temperature in the range of from about 90°C to about 230°C, preferably at a temperature in the range of from about 110°C to about 180°C.

The wax dispersion may be added to the aggregate in an amount of from about 0.1 wt% to about 10 wt%, preferably from about 2 wt% to about 6 wt%, based on the total mass of the bitumen feedstock that is added to the aggregate.

Advantageously, the methods of the invention make use of existing bitumen foaming devices and/or existing asphalt mixers in asphalt mixing plants and the wax dispersion can be added directly into the asphalt mixer using existing liquid additive dosing systems. Thus, the methods of the invention can be implemented with minimal, if any, equipment changes and at low cost to the user.

The methods of the invention conveniently enable elastomers to be added to the bitumen with the wax via the wax dispersion for *in situ* co-modification (i.e. concurrent wax- and elastomer modification) of asphalt mixes. Elastomer modification allows the low temperature flexibility of asphalt to be improved, resulting in higher cracking resistance and better fatigue behaviour. Wax modification enables lower viscosity of asphalt and hence better workability, as well as enables lower temperature asphalt mixing operations. Furthermore, the wax added via the wax dispersion imparts warm mix capabilities after the bitumen foam has collapsed.

The methods of the invention have the advantage that they combine the beneficial effects of bitumen foaming and the beneficial effects of wax on the bitumen composition and the asphalt mix, while enabling lower asphalt mixing and/or foaming temperatures than conventional processes where bitumen foaming and wax addition are performed separately.

### Bitumen Composition

According to another aspect of the invention, there is provided a bitumen composition, the bitumen composition comprising:
a bitumen; and
the wax dispersion as hereinbefore defined.

The bitumen composition may be produced according to the method hereinbefore described.

Preferably, the bitumen composition is a foamed bitumen composition.

### Asphalt Mix

According to another aspect of the invention there is provided an asphalt mix, the asphalt mix comprising:
a bitumen;
the wax dispersion as hereinbefore defined; and
an aggregate.

The asphalt mix may be produced according to the method hereinbefore described.

The aggregate may comprise or may consist of recycled or reclaimed asphalt pavement (RAP).

Preferably, the asphalt mix is a warm mix asphalt.

### Use of the Bitumen Composition

According to another aspect of the invention, there is provided the use of a bitumen composition or a foamed bitumen composition to produce an asphalt mix.

The bitumen composition or the foamed bitumen composition may be produced according to the method hereinbefore described.

The asphalt mix may be produced according to the method hereinbefore described. Preferably, the asphalt mix is a warm mix asphalt as hereinbefore described.

### Use of the Wax Dispersion

According to another aspect of the invention, there is provided the use of the wax dispersion as hereinbefore defined for producing a bitumen composition.

Preferably, the bitumen composition is a foamed bitumen composition. The foamed bitumen composition may be as hereinbefore described.

### Use of the Asphalt Mix

According to another aspect of the invention, there is provided the use of an asphalt mix for paving.

The asphalt mix may be produced according to the method hereinbefore described. Preferably, the asphalt mix is a warm mix asphalt as hereinbefore described.

### Experimental Results

### Preparation of Wax Dispersions

### Base Wax Dispersions

Base wax dispersions according to the present invention were prepared by adding a wax comprising 60 wt% Fischer-Tropsch wax and 40 wt% petroleum slack wax available under the trade name SASOBIT REDUX, and an emulsifier to water and homogenizing all the components in an APV-type laboratory high pressure homogenizer operated at 100°C and 220 bar(g). The components of the base wax dispersions (wax, emulsifier, and water) were cycled for between 195 seconds and 240 seconds, before being discharged and cooled down to 25°C using a plate heat exchanger.

Base wax dispersions using either anionic emulsifiers (anionic wax dispersions) or cationic emulsifiers (cationic wax dispersions) were produced as follows:

| | |
|---|---|
| Anionic Wax Dispersion | 50 wt% water |
| | 45.68 wt% wax |
| | 0.11 wt% Na₂SO₄ |
| | 2.2 wt% C₁₈-C₂₂ fatty acid |
| | 1.01 wt% diethanolamine |
| | 1.0 wt% fatty alcohol ethoxylate (9 EO) |
| | available in the trade name EMULAN AT 9 |
| | Viscosity: 44 mPa s at 23°C |
| Cationic Wax Dispersion | 50 wt% water |
| | 47.66 wt% wax |
| | 1.4 wt% N-C₁₆-C₂₂-alkyltrimethylenediamine |
| | available under the trade name |
| | DINORAM 42 E |
| | 0.7 % acetic acid (60 %) |
| | 0.24 % dicyclohexylamine |
| | Viscosity: 50 mPa s at 23°C |

The storage stability of the base wax dispersions was evaluated. Both the anionic- and cationic wax dispersions were found to be storage stable at room temperature for more than 4 weeks.

### Elastomer/Wax Dispersions

Three wax dispersions comprising elastomer (elastomer/wax dispersions) were prepared by mixing the anionic wax dispersion with high solid content styrene-butadiene-rubber (SBR) latex dispersions for asphalt applications available under the trade names BUTONAL NS 177, BUTONAL NX 1129 and BUTONAL 5126 X. One-to-one (1:1) mass ratios of the SBR latex dispersions and the anionic wax dispersion were compatible, and found to be storage stable for at room temperature for more than 1 week.

### Bitumen Foaming Investigations

Both the anionic and cationic base wax dispersions were used for bitumen foaming investigations and asphalt production investigations. For the bitumen foaming investigations, the anionic- and cationic base wax dispersions were diluted to 33.33 wt% wax content using water.

Foamed bitumen was prepared using a WIRTGEN WLB 10 S laboratory foamed bitumen plant. Bitumen available under the trade name AQUALT 70/100 was used for the bitumen foaming studies.

The diluted base wax dispersions were fed into the bitumen foaming plant at a concentration of 5 wt% relative to the mass of bitumen.

A reference water-foamed bitumen experiment was conducted and compared to bitumen foamed with the anionic wax dispersions and cationic wax dispersion of the inventions. Expansion and foam half-life were determined according to the standardized procedure *"*Merkblatt für Kaltrecycling in situ im Straßenoberbau, 2005" of the German Road and Transportation Research Association (*Forschungsgesellschaft für Straßen- und Verkehrswesen* (FGSV)).

Foam expansion of bitumen foamed with the anionic- and cationic wax dispersions was found to be in the range of from 3 to 6 times, compared to 32 times for water-foamed bitumen.

Foam stability, expressed as foam half-life in seconds, increased from 6 seconds for water-foamed bitumen, to 15 seconds for bitumen foamed with the anionic wax dispersion, and to 39 seconds for bitumen foamed with the cationic wax dispersion.

The inventors believe that an extension of the bitumen foam half-life imparted by the wax dispersions of the invention is practically more important in the production of asphalt mixes than the reduced foam expansion, since the lubricity and workability of the bitumen is enhanced.

In particular, longer bitumen foam half-life improves the lubricity and workability of bitumen for an extended duration, which equals or even exceeds the typical batch mixing duration (20-30 seconds) (Asphalt Leitfaden *"Splittmastixasphalt", Deutscher Asphaltverband* e.V., 2000) in a batch asphalt mixing plant during mixing of the foamed bitumen with aggregate, which is not the case with water-foamed bitumen that had only 6 second half-life.

### Preparation of Asphalt Mixes

The bitumen used to prepare the reference hot mix asphalt was a pavement grade bitumen available under the trade name AZALT 70/100. All other asphalt mixes were prepared with pavement grade bitumen suitable for foaming, available under the trade name AQUALT 70/100.

Several asphalt mixes A to F were prepared in a temperature controlled, heated GZM-30 laboratory asphalt mixer (manufacturer Baustoff-Prüfsysteme Wennigsen GmbH), applying the German regulations TL Asphalt-StB 07/13 for asphalt binder course mix AC 16 B S. The bitumen content was 4.5 wt% and the aggregate content was 95.5 wt%. The aggregate type was basalt, and the filler was limestone.

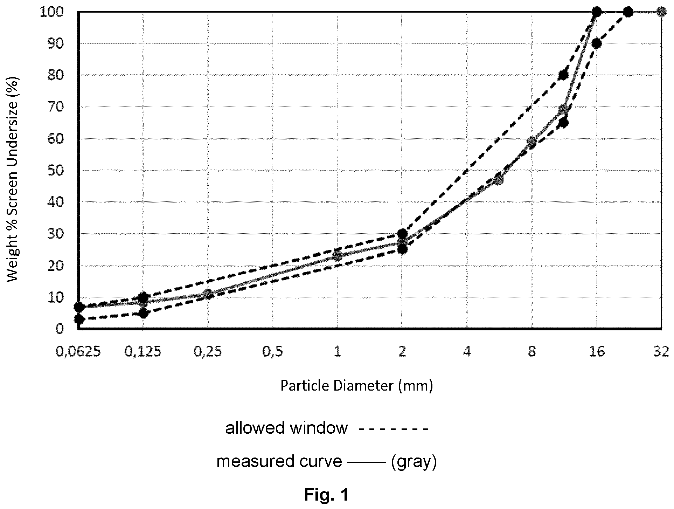

Fig. 1 shows the aggregate grading curve of the asphalt binder course mix AC16 B S according to TL Asphalt-StB 07/13 with the particle diameter shown on the X-axis and the weight percentage screen undersize shown on the Y-axis.

A reference hot mix asphalt was mixed with bitumen available under the trade name AZALT 70/100 (A) and compacted at 150°C, the reference asphalt prepared with water-foamed bitumen (B) was mixed at 120°C and the asphalt mixes with various wax dispersions (B, C) were also mixed at 120°C.

In accordance one embodiment of the method of the invention in which the wax dispersion is added directly to the asphalt mixer, the cationic wax dispersion was directly added into the asphalt mixer at 120°C (E). Additionally, for comparative purposes, a wax available under the trade name SASOBIT REDUX was added directly to the asphalt mixer at 120°C (F). Table 1 shows the various asphalt mixes A to F produced and the corresponding mixing temperatures.

**Table 1: Asphalt mixes**

| Mix No. | Mix type | Bitumen type | Mixing temperature [°C] |
|---|---|---|---|
| A | Hot Mix | AZALT 70/100 without additive | 150 |
| B | Warm Mix | AQUALT 70/100 foamed with water | 120 |
| C | Warm Mix | AQUALT 70/100 foamed with the anionic wax dispersion | 120 |
| D | Warm Mix | AQUALT 70/100 foamed with the cationic wax dispersion | 120 |
| E | Warm Mix | AQUALT 70/100; cationic wax dispersion directly added into the asphalt mixer | 120 |
| F | Warm Mix | AQUALT 70/100; solid wax directly added into the asphalt mixer | 120 |

The asphalt mixes A to F were compacted at the mixing temperatures with simultaneous compaction resistance measurement. Table 2 shows the asphalt properties of each of the asphalt mixes A to F.

**Table 2: Asphalt properties**

| Mix No. | Compaction resistance T¹ [Nm] | Density ty [g/cm³] | Indirect tensile strength ITS² [MPa] | Water sensitivity ITSR³ [%] |
|---|---|---|---|---|
| A | 53.2 | 2.469 | 1.5 | 75 |
| B | 54.6 | 2.435 | 1.1 | 58 |
| C | 50.1 | 2.435 | 0.9 | 62 |
| D | 45.7 | 2.462 | 1.2 | 70 |
| E | 52.4 | 2.441 | 1.2 | 73 |
| F | 53.0 | 2.462 | 1.4 | 74 |

| | | | | |
|---|---|---|---|---|
| ¹: According to TP Asphalt-StB part 10B ²: According to TP Asphalt-StB part 23 ³: Indirect tensile strength ratio: after water storage/before water storage according to TP Asphalt-StB part 12 | | | | |

Compared to the hot mix reference (A), the addition of wax only at a 30°C lower temperature (F) resulted in the same compaction resistance. A slightly lower compaction resistance was obtained with the direct addition of the cationic wax dispersion to the asphalt mixer (E). Bitumen foaming with water (B) resulted in higher compaction resistance, which was strongly reduced when wax dispersions were used for foaming (C, D). The lowest compaction resistance was found with bitumen foamed with the cationic wax emulsion (D). All foamed bitumen asphalts (B, C, D) had reduced density, tensile strength, and water sensitivity relative to the hot mix reference (A), with the best performance for asphalt produced from bitumen foamed using the cationic wax dispersion (D).

A series of asphalt mixes G, H and I were produced at different mixing temperatures using bitumen foamed with the cationic wax dispersion (asphalt mix (D)), in order to evaluate the temperature reduction potential of asphalt mixes using the wax dispersions of the invention. The asphalt properties for each of mix G, H and I are shown in Table 3.

**Table 3: Asphalt properties produced at various mixing temperatures using foamed bitumen with cationic wax dispersion (D)**

| Mix No. | Mixing temperature [°C] | Compaction resistance T [Nm] | Density ty [g/cm³] | Indirect tensile strength ITS [MPa] | Water sensitivity ITSR* [%] |
|---|---|---|---|---|---|
| G | 150 | 54.5 | 2.432 | 1.40 | 83.2 |
| H | 120 | 55.5 | not measured | 1.08 | 73.3 |
| I | 100 | 58.1 | 2.416 | 1.04 | 66.8 |

| | | | | | |
|---|---|---|---|---|---|
| * Indirect tensile strength ratio: after water storage/before water storage | | | | | |

The results show that a mixing temperature reduction of 30°C from 150°C (G) to 120°C (H) does not lead to significant increase in compaction resistance and thus demonstrates the beneficial effect of the wax dispersions of the invention on temperature reduction potential in asphalt mixing.

The results also indicate that the temperature reduction from 120°C to 100°C does not impact the indirect tensile strength of the asphalt strongly.

The results demonstrate that a wax dispersion can be successfully used for bitumen foaming. In comparison to bitumen foaming with water, bitumen foaming according to the method of the invention using the wax dispersion of the invention results in lower compaction resistance, better compaction, and better asphalt performance.

The direct addition of the wax dispersion into the asphalt mixer according to the method of the invention results in comparable performance to dosing wax alone (i.e. wax not in a dispersion). Conveniently, the wax dispersion of the invention can be dosed into the asphalt mixer using existing liquid additive injection systems.

Conveniently the wax dispersion optionally comprising an elastomer enables asphalt co-modification, i.e. concurrent asphalt modification with both wax and elastomer, to improve the properties of the asphalt produced therefrom.

## Claims

1. A wax dispersion, the wax dispersion comprising:
a wax comprising one or more hydrocarbon waxes selected from the group comprising Fischer-Tropsch waxes, petroleum-based waxes, polyolefin waxes, or mixtures thereof; water; and
an emulsifier.

2. The wax dispersion according to claim 1, wherein the wax dispersion additionally comprises alpha olefins, fatty acids, fatty alcohols, esters of fatty acids, amide waxes, or any mixture thereof.

3. The wax dispersion according to claim 1 or claim 2, wherein the wax dispersion comprises from 5 wt% to 95 wt% of the wax, preferably from 30 wt% to 70 wt% of the wax, based on the total mass of the wax dispersion.

4. The wax dispersion according to any one of claims 1 to 3, wherein the wax dispersion comprises from 0.2 wt% to 10 wt% of the emulsifier, preferably from 1 wt% to 6 wt% of the emulsifier, based on the total mass of the wax dispersion.

5. The wax dispersion according to any one of claims 1 to 4, wherein the wax dispersion comprises an elastomer, preferably from 1 wt% to 70 wt% of the elastomer, preferably from 20 wt% to 50 wt% of the elastomer, based on the total mass of the wax dispersion.

6. The wax dispersion according to any one of claims 1 to 5, wherein the emulsifier is an anionic emulsifier, a cationic emulsifier, a non-ionic emulsifier, or any mixture thereof.

7. The wax dispersion according to any one of claims 1 to 6, wherein the wax comprises petroleum slack wax and Fischer-Tropsch wax, preferably:
20 wt% to 80 wt% of the petroleum slack wax; and
20 wt% to 80 wt% of the Fischer-Tropsch wax,
each relative to a total mass of the mixture of the Fischer-Tropsch wax and the petroleum slack wax.

8. The wax dispersion according to any one of claims 1 to 7, wherein the Fischer-Tropsch wax has the following properties:
a congealing point according to ASTM D938 of 50°C or higher, preferably 60°C or
higher, more preferably between 70°C and 110°C, most preferably between 75°C and 82°C;
a MEK-oil content according to ASTM D7211-06 below 5 wt%, preferably below 2 wt%;
a kinematic viscosity at 100°C according to ASTM D7042-11 from 3 mm²/s to 15 mm²s,
preferably 5 mm²/s to 10 mm²/s, more preferably from 7mm²/s to 9 mm²/s;
a needle penetration at 25°C according to ASTM D1321 below 30 1/10mm, preferably below 10 1/10mm; and
a n-alkane content above 80 wt%.

9. The wax dispersion according to any one of claims 1 to 8, wherein the petroleum slack wax has the following properties:
a congealing point according to ASTM D938 below 65°C;
a MEK-oil content according to ASTM D7211-06 above 5 wt%, preferably above 15 wt%;
a kinematic viscosity at 100°C according to ASTM D7042-11 from 3.5 mm²/s to 10 mm²/s, preferably from 5 mm²/s to 10 mm²/s, more preferably from 6 mm²/s to 8 mm²/s;
a needle penetration at 25°C according to ASTM D1321 above 50 1/10 mm; and
a n-alkane content below 70 wt%, preferably below 40 wt%.

10. A method to produce a foamed bitumen composition, the method comprising:
adding the wax dispersion according to any one of claims 1 to 9 to a bitumen feedstock in a bitumen foaming device thereby to produce the foamed bitumen.

11. The method according to claim 10, wherein the wax dispersion is added to the bitumen feedstock in an amount of from 0.1 wt% to 10 wt%, preferably from 2 wt% to 6 wt%, based on the total mass of the bitumen feedstock.

12. A method to produce an asphalt mix, the method comprising:
adding a bitumen feedstock and the wax dispersion according to any one of claims 1 to 9 to an aggregate in an asphalt mixer thereby to produce the asphalt mix.

13. The method according to claim 12, wherein the bitumen feedstock:
a. is added to the aggregate prior to adding the wax dispersion to the aggregate; or
b. is added to the aggregate after adding the wax dispersion to the aggregate; or
c. is added to the aggregate concurrently with adding the wax dispersion to the aggregate.

14. The method according to claim 12 or 13, where in the bitumen feedstock is foamed in the asphalt mixer when the bitumen feedstock is contacted with the wax dispersion.

15. The method according to any one of claims 12 to 14, wherein the wax dispersion is added to the bitumen feedstock in a bitumen foaming device thereby to form a foamed bitumen composition, and the foamed bitumen composition is then added to the aggregate in the asphalt mixer.

16. The method according to any one of claims 12 to 15, where in the foamed bitumen is produced according to any one of claims 11 to 13.

17. The method according to any one of claims 12 to 16, wherein the asphalt mix is a warm mix asphalt.

18. The method according to any one of claims 12 to 17, wherein the aggregate comprises recycled or reclaimed asphalt pavement (RAP).

19. A foamed bitumen composition obtainable according to claim 10 or claim 11.

20. An asphalt mix obtainable according to the method of any one of claims 12 to 18.

21. Use of a foamed bitumen composition obtainable according to the method of claim 10 or claim 11 to produce an asphalt mix, preferably a warm mix asphalt.

22. Use of the wax dispersion according to any one of claims 1 to 9 for producing a bitumen composition, preferably a foamed bitumen composition.

23. Use of the asphalt mix obtainable according to the method of any one of claims 12 to 18 for paving.
